Europäisches Patentamt

European Patent Office

Office européen des brevets

(11) Publication number: **0 162 461 B1**

## EUROPEAN PATENT SPECIFICATION

(45) Date of publication of patent specification: **22.07.92**  (51) Int. Cl.⁵: **H04H 1/00, H04J 3/00**

(21) Application number: **85106302.4**

(22) Date of filing: **22.05.85**

(54) **Digital signal transmitting system.**

(30) Priority: **24.05.84 JP 105188/84**

(43) Date of publication of application:
**27.11.85 Bulletin 85/48**

(45) Publication of the grant of the patent:
**22.07.92 Bulletin 92/30**

(84) Designated Contracting States:
**DE FR GB NL**

(56) References cited:
**EP-A- 0 141 431
DE-A- 3 126 880
DE-A- 3 146 466**

**IEEE TRANSACTIONS ON CONSUMER ELEC-
TRONICS, vol. CE-30, no. 3, August 1984,
pages 462-466, IEEE, New York, US; Y.
KOJIMA et al.: "A new digital audio and data
transmission system using the CATV net-
work"**

(73) Proprietor: **SONY CORPORATION
7-35 Kitashinagawa 6-chome Shinagawa-ku
Tokyo 141(JP)**

(72) Inventor: **Ishidoh, Takanobu
c/o SONY CORPORATION 7-35,
Kitashinagawa 6-chome
Shinagawa-ku Tokyo(JP)**
Inventor: **Kondoh, Yoshiyuki
c/o SONY CORPORATION 7-35,
Kitashinagawa 6-chome
Shinagawa-ku Tokyo(JP)**

(74) Representative: **TER MEER - MÜLLER - STEIN-
MEISTER & PARTNER
Mauerkircherstrasse 45
W-8000 München 80(DE)**

## Description

The following concerns a transmitting system and a receiving system for digital signals. Such systems are used, for example, in wire or cable television systems having many television receivers as terminals.

A transmission system using a cable television network is described by Y. Kojima et al. in IEEE Transactions on Consumer Electronics, Vol. CE-30, No. 3, August 1984, pages 462-466 under the title "A New Digital Audio and Data Transmission System Using the CATV Network". The system is arranged to transmit frames of a composite digital signal including frame synchronizing signals, service bit signals and information signals. Each frame (designated as "super frame" in the mentioned article) has 256 words (designated as "frames" in the mentioned article), each word comprising 8 synchronizing bits, 4 service bits and 156 data bits, i.e. a sum of 168 bits. The related digital signal receiving system is arranged to receive such frames.

DE-A-31 26 880 describes a digital signal transmitting system, especially for satellite broadcast, which is arranged to transmit words (designated as "main frames" (Hauptrahmen)) of 320 bits each, and each comprising a synchronizing signal, service bit signals and information signals. The service bits of a predetermined number of words are collected to build a unit of service bits which is called a subframe. This unity has the same structure as a word ("main frame"). All subframes have the same structure.

It is an object of the present inventions to provide a transmitting system and a receiving system for digital signal, said systems having a high flexibility concerning the purposes to be performed by the service bit signals.

The digital transmitting system according to the present invention is arranged to provide service bit signals in one of a plurality of predetermined service bit formats within each frame. The digital signal receiveing system of the present invention is arranged to evaluate different predetermined service bit formats which are received in unities of a frame.

By providing different formats of service bit signals, each format extending over one frame of the composite digital signal, it is possible to change the service bit information with each frame. One of a plurality of new features of such systems is that it is possible to address a large number of terminals, for example one million terminals, at high speed. Additionally it is possible to transmit a descrambling key code to each terminal together with the address number of that terminal. Informations concerning a terminal number, a group number and a tier level can be transmitted independently from each other.

It is of special advantage to transmit a unique service bit format each frame, said format indicating a terminal number, a group number and/or a tier level. Other formats may define details of information related to these values.

When transmitting a scrambled key format, it is possible to change the scrambling key code in short intervals if desired, and to inform each terminal on the changed code.

The above, and other objects, features and advantages of the present invention, will become apparent from the following detailed description taken in conjunction with the attached drawings.

BRIEF DESCRIPTION OF THE DRAWINGS

Fig. 1 is a table showing a word format for a composite digital signal that is used in a system according to this invention;

Fig. 2 is a similar table showing a frame format for the composite digital signal used in the system according to this invention;

Figs. 3A to 3E and Fig. 4 are tables showing respective examples of various control signals that are transmitted on service bits;

Fig. 5 is a table showing an example of types of control signals which are transmitted in a frame sequential manner;

Figs. 6A to 6D are tables showing examples in which a unique service format is transmitted on different service bits;

Fig. 7A is a circuit block diagram showing an embodiment of a transmitter according to this invention;

Fig. 7B is a circuit block diagram showing details of an important component of the transmitter shown in Fig. 7A; and

Fig. 8 is a circuit block diagram showing an embodiment of a receiver or terminal unit according to this invention.

DETAILED DESCRIPTION OF THE PREFERRED EMBODIMENTS

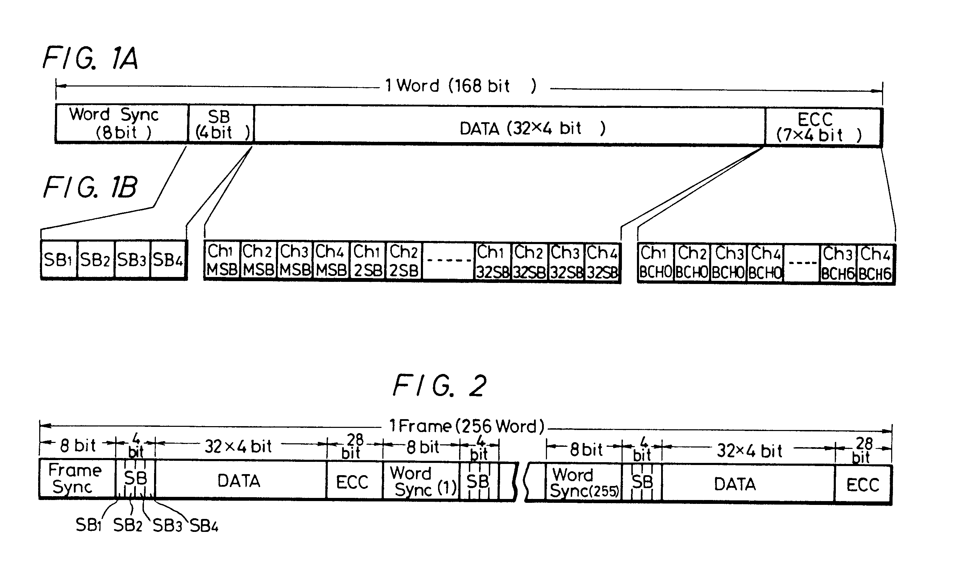

Referring to the drawings in detail, the signal or data format used in accordance with this invention will be first described with reference to Figs. 1 to 6.

As shown in Figs. 1A and 1B, in such data format, each word is formed of 168 bits and comprises a word synchronizing signal "Word Sync", for example, of 8 bits, a service bit signal portion "SB" formed of 4 bits $SB_1$ to $SB_4$, a data portion "DATA" of 128 bits (providing 4 channels of data with each channel being formed of 32 bits), and an error check code "ECC" of 28 bits (with the error check code for each of the 4 channels being formed of 7 bits). As shown in Fig. 1B, in the data portion of 128 bits and the error check code ECC of each word, the data DATA and error check code ECC of each channel are respectively re-arranged at every bit, that is, the data and error check codes for the several channels are subjected to so-called bit-interleaving processing.

Fig. 2 shows that, in a data format of a frame of a digital signal used in accordance with this invention, each frame is formed of 256 words, with each word having the data format shown in Figs. 1A and 1B. As shown more particularly in Fig. 2, in each frame, the first word is formed of a frame sync signal "Frame Sync", service bits SB, data DATA and an error check code ECC, and the second word is formed of a word sync signal "Word Sync (1)", service bits SB, data and an error check code ECC. In like manner, a third word is formed of a word sync signal "Word Sync (2)", service bits SB, data and an error check code ECC. Similarly, the last or 256th word is formed of a word sync signal "Word Sync (255)", service bits SB, data DATA and an error check code ECC.

In this connection, the service bits portion of 4 bits assigned to each word aggregates 1024 bits per frame. In other words, there are 256 of each of the service bits $SB_1$ to $SB_4$ in each frame. Therefore, in accordance with this invention, there are 256 of each of the service bits $SB_1$ to $SB_4$ available to transmit control data for each television receiver or terminal unit, as will be further described later.

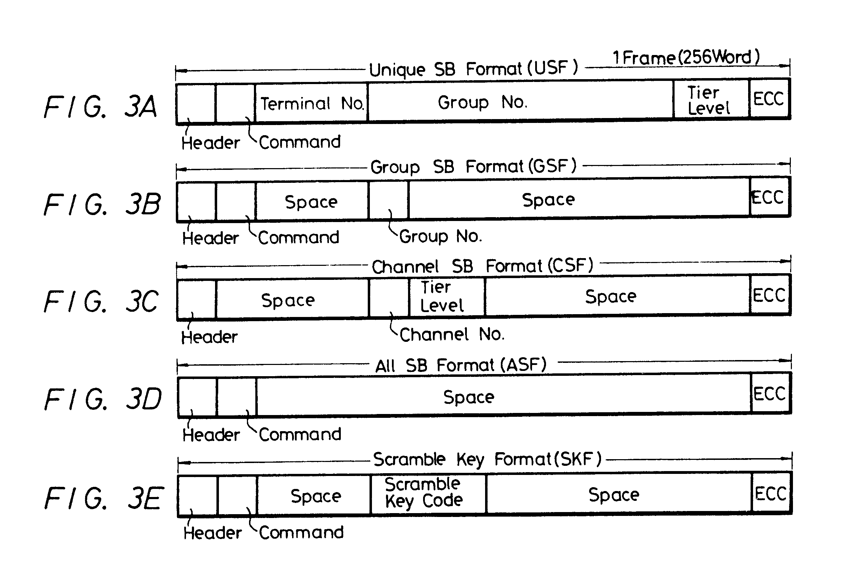

Five kinds of frame formats in which the service bits SB are used to transmit control data are shown in Figs. 3A to 3E. More particularly, a unique service format (USF) is shown in Fig. 3A, a group service format (GSF) is shown in Fig. 3B, a channel service format (CSF) is shown in Fig. 3C, an all service format (ASF) is shown in Fig. 3D, and a scrambling key code format (SKF) is sown in Fig. 3E.

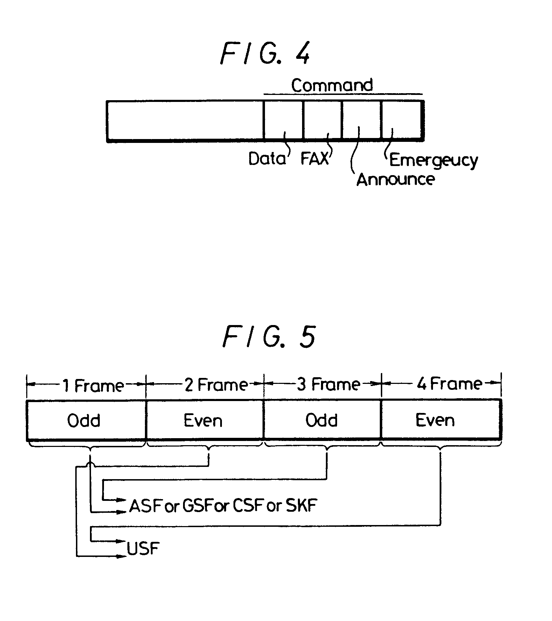

In each of Figs. 3A to 3E, the legend "Header" refers to a portion of the format which identifies the kind of the respective format; and, in each of Figs. 3A,3B,3D and 3E, the legend "Command" refers to the portion of the format by which a television receiver is commanded to operate. In Figs. 3A and 3B, the legend "Group No." refers to the number of a group of receivers having a common characteristic, such as, the area in which the television receivers are situated, or the occupations of the subscribers, or the like. In Fig. 3A, the legend "Terminal No." refers to the address number assigned to a particular television receiver. In Figs. 3A and 3C, the legend "Tier Level" refers to the condition of the contract for the respective subscriber or television receiver. For example, if the "Tier Level" of the contract is below a predetermined level, the television receiver covered by such contract will be able to receive a broadcast or transmitted signal which is being transmitted on a data channel, such as, a music broadcasting channel, identified in the portion of the format indicated by the legend "Channel No." on Fig. 3C. Finally, in Fig. 3E, the legend "Scramble Key Code" identifies a portion of the respective format in which will appear scramble key data, for example, data representing an initial value of an M-sequence code used for descrambling data, as hereinafter described. Of course, in each of Figs. 3A to 3E, the legend ECC designates an error check code. The "Command" indicated on Figs. 3A, 3B,3D and 3E, may be any one of the commands shown on Fig. 4, that is, a command "Emergency", to start emergency broadcasting a command "Announce", to announce broadcasting, a command "FAX" to start facsimile reception , or a command "DATA" to start the loading of data .

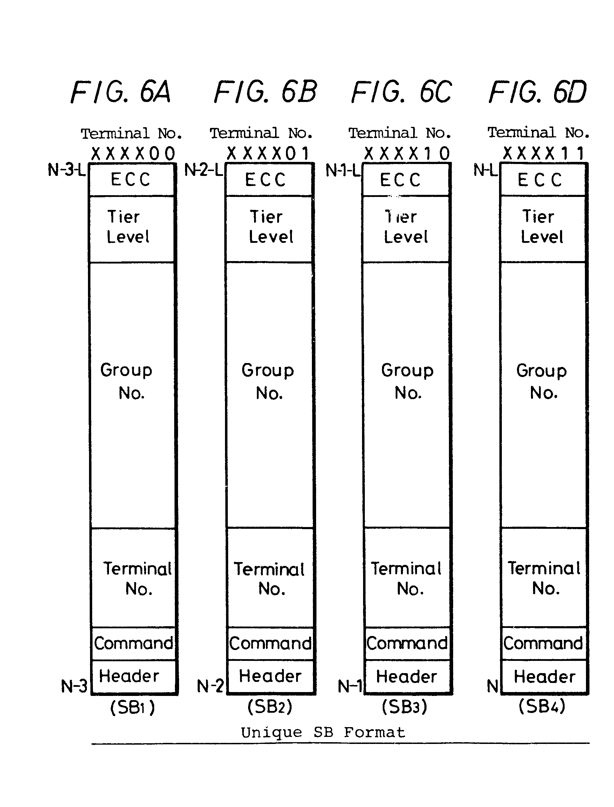

As indicated on Fig. 5, during the first or an odd-numbered frame, the formats ASF (Fig. 3D), GSF (Fig. 3B), CSF (Fig. 3C) and SKF (Fig. 3E) are delivered alternately, while, during the second or even-numbered frame, the format USF (Fig. 3A) is delivered alone. The manner in which the unique service format (USF) of Fig. 3A is assigned to each television receiver in a memory is illustrated in Figs. 6A to 6D. Thus, for example, when the "Terminal No." identifying a television receiver is expressed as "00" in the lower or two least significant bits of a binary code expression, the unique service format of Fig. 6A is assigned to that receiver in the memory for transmission on a service bit $SB_1$. Similarly, when the "Terminal No." is expressed as "01", the unique service format shown in Fig. 6B is assigned to the respective receiver in the memory for transmission on a service bit $SB_2$; when the "Terminal No." is "10", the unique service format shown in Fig. 6C is assigned to the memory for transmission on service bit $SB_3$; and, when the "Terminal No." is "11", the unique service format shown in Fig. 6D is assigned to the memory for transmission on service bit $SB_4$. It is of course to be noted that the four unique service formats (USF) illustrated on Figs. 6A to 6D, respectively, are different in their contents with the exception of the headers thereof which merely identify the formats as being of the USF type. In each of Figs. 6A to 6D, the reference letter N indicates an address in the memory, and the reference letter L indicates the length of the respective unique service format.

The manner in which control data for controlling a receiver are added to the service bits will be described separately for the transmitter and the receiver.

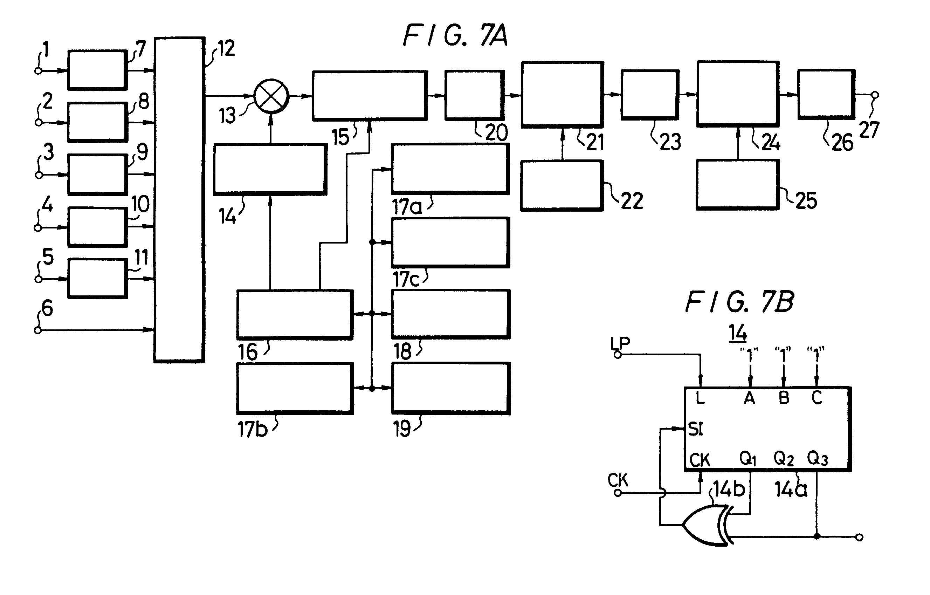

As will be further described later, at the transmitter, there are provided five memories, for example, memories 17a,17b,17c (Fig. 7A) corresponding to the all service format ($\overline{\text{ASF}}$), the channel service format (CSF), and the scrambling key format (SKF), respectively, a group information memory 18 corresponding to the group service format (GSF), and a unique information memory 19 corresponding to the unique service format (USF). As described above with reference to Fig. 5, the data in the several formats is transmitted alternately at every frame. In order that the data of any of service memories 17a to 17c and group service memory 18 can be received when the receiver selects any of the service bits $SB_1$ to $SB_4$, the same type of format is transmitted on the service bits $SB_1$ to $SB_4$. When the unique service format (USF) is added to the service bits and then transmitted, the memory map for the individual information is as shown in Fig. 3A. As described above, the service bit $SB_1$ has added thereto the unique service format (USF) shown in Fig. 6A, the service bit $SB_2$ has added thereto the unique service format (USF) shown in Fig. 6B, the service bit $SB_3$ has added thereto the unique service format (USF) shown in Fig. 6C, and the service bit $SB_4$ has added thereto the unique service format (USF) shown in Fig. 6D. When the unique service format is added to the service bit and the data is addressed at high speed, the unique service format is transmitted in an even frame period as shown in Fig. 5. Thus, the cycle of the unique service format in Fig. 3A can become long depending on the number of television receivers. However, when each individual receiver or terminal is also identified by a group number which is a relatively low number (for example, one group contains 10,000 terminals) group service format contains vacant spaces, as in Fig. 3B so that the cycle of the group service format is very much shorter than that of the unique service format, and transmission at high speed becomes possible.

On the other hand, at the receiver side, only that one of the service bits $SB_1$ to $SB_4$ corresponding to the address number (Terminal No.) of the receiver is input thereto. More particularly, when the lower 2 bits of the address number of the receiver are "00", only the service bit $SB_1$ is input thereto. Similarly, when the lower 2 bits of the address are "01", only the service bit $SB_2$ is input, when they are "10", only the service bit $SB_3$ is input and when they are "11", only the service bit $SB_4$ is input to the reciever.

Such service bit corresponding to the address number of the receiver is input thereto within one frame period in synchronism with the frame sync signal. At such time, since the service bit is transmitted in the serial format, the sampling of data and the error checking of data can easily be carried out by utilizing the serial port of a microcomputer or microprocessor constituting a controller at the receiver side.

Of the service bits sampled in the one frame period, the data portion, with the exception of the start bit and stop bit, is produced and its data format is as shown in the respective one of Figs. 3A to 3E. In other words, the data sampled in a frame period will be in accordance with one of the formats shown in Figs. 3A to 3E. As earlier noted with reference to Fig. 5, the unique service format (USF) and the other service formats (GSF,CSF,ASF and SKF) are alternately transmitted and these formats are discriminated from one another by the header that is inserted in the start portion of each format.

Next, a description will be given of the signal processing that is carried out when each format is received. In the case when the unique service format (USF) shown in Fig. 3A is received, a receiver having an address number coincident with that specified by the (Terminal No.) of the format (USF) memorizes the group number specified by the (Group No.) and the level specified by the (Tier Level) and executes the processing specified by the (Command).

When the group service format (GSF) shown in Fig. 3B is received, all receivers belonging to the specified (Group No.) carry out the signal processing specified by the (Command). In other words, the receivers in which there has been stored the group number specified by the unique service format (USF) and which is coincident with the group number specified by the group service format (GSF) carry out the signal processing specified by the (Command).

When the channel service format (CSF) is received, the tier level of the data channel (music broadcasting and so on) to be transmitted by the system embodying this invention is specified in all the receivers. Service for the user is commenced only when the tier level of the channel selected by the user coincides with the tier level specified by the unique service format (USF) and which has been stored therein.

In the case of the all service format (ASF), the processing corresponding to the specified command is carried out regardless of the Terminal No. In the case of the scramble key format (SKF), the data is descrambled by the specified scramble key code. It is to be noted that the above-described scramble key format (SKF) may be transmitted as a part of the all service format (ASF).

Referring now to Fig. 7A, it will be seen that, in the transmitting side of a system according to the invention, analog information or data, for example, constituting a stereo music signal, is supplied to input terminals 1 and 2. Analog information or data comprised of broadcast communications and announcements is supplied to input terminals 3 and 4. Facsimile information or data is supplied to an input terminal 5, and digital information or data, such as, that constituting game software and the like, is supplied to an input terminal 6. The analog data from input terminals 1 to 4 are supplied to, and converted to digital signals by, analog-to-digital converters (hereinafter simply A/D converters) 7 to 10, respectively. The respective digital signals are applied to a multiplexer 12, while the facsimile signal from input terminal 5 is also supplied through a facsimile interface circuit 11 to multiplexer 12. The digital data from input terminal 6 is supplied as is to multiplexer 12. In multiplexer 12, the input signals are distributed into respective individual channels and subjected to signal processings, such as, the addition of error check codes, bit-interleaving and so on and then delivered therefrom.

The output signal from multiplexer 12 is supplied to one input terminal of a multiplier 13 and therein multiplied with an M-sequence code signal supplied to another input terminal of multiplier 13 from an M-sequence code oscillator 14. Thus, the output signal from multiplexer 12 is scrambled. If n is taken as the stage number of shift register in the M-sequence code oscillator 14, the latter has $2^n-1$ bits as the length of its maximum sequence. As shown more particularly in Fig. 7B, M-sequence code oscillator 14 comprises a shift register 14a which is formed of a D-type flip-flop, for example, of three stages, and a logic circuit which feeds back a logic value representative of the state of each stage to input terminal SI of the shift register 14a. Such logic circuit is shown to include an exclusive-OR (hereinafter referred to as EOR) circuit 14b. In the illustrated case, the M-sequence code oscillator 14 produces an M-sequence code of seven cycles, each cycle being represented as "1110100". The frequency of the clock signal supplied to the clock terminal CK for use in shifting register 14a is set properly and the initial phase of the M-sequence code is determined by a frame synchronizing pulse that is supplied from a terminal LP to the load terminal L of shift register 14a.

More specifically, during a period in which the frame synchronizing pulse is supplied from terminal LP to load terminal L of shift register 14a, if the clock signal is supplied from terminal CK to the clock terminal of shift register 14a, in synchronism with an edge, for example, the rising edge of the clock signal, a predetermined preset signal, for example, "111" is set at preset terminal A,B and C of shift register 14a. Thus, the frame synchronizing pulse and a PN (pseudo noise) code of the M-sequence code oscillator 14 are in phase coincidence with each other.

The output pulse of seven cycles, such as, "1110100", produced from the M-sequence code oscillator 14 is multiplied with the output of multiplexer 12 so that the multiplier 13 produces data scrambled by the M-sequence code.

The data and error check code thus scrambled is supplied to a sync/SB (service bit) generator 15 in which the synchronizing signal and the service bits are added to the scrambled data and error check code. At this time, under the control of a controller 16 which may be a microcomputer or microprocessor, outputs from memories 17a,17b,17c,18 and 19 are respectively fed to the sync/SB generator 15 and there selectively added to the service bits. Further, the initial value (scramble key data) of the M-sequence code oscillator 14 is set by controller 16 in synchronism with the frame synchronizing signal. This initial value is changed constantly from time to time in order to increase security.

The output signal from generator 15, that is, the signal having the synchronizing signal and the service bits inserted into the data, is supplied through a binary transversal filter 20 to an amplitude (A/M) modulator 21. The filter 20 is used as an equalizer for matching the frequency characteristics of the whole transmitting-receiving system, thereby to remove inter symbol interference. In A/M-modulator 21, the carrier from an oscillator 22 is modulated by the output signal from filter 20. Accordingly, modulator 21 produces, at its output, an intermediate frequency signal and this signal is supplied through a vestigial side-band filter 23 to a mixing circuit 24. In mixing circuit 24, the intermediate frequency signal is mixed with the local oscillation frequency signal from a local oscillating circuit 25 and is thereby frequency-converted. Thus, there is produced, at the output side of mixing circuit 24, a signal indicative of a difference between the local oscillation signal and the intermediate frequency signal. The local oscillation frequency of local oscillating circuit 25 is set higher than a transmitting frequency of a desired channel by the value of the intermediate frequency. Accordingly, the transmission channel is determined by selected the local oscillation frequency.

The output signal from mixing circuit 24 is delivered through a band-pass filter 26 to an output terminal 27 and the signal developed at the output terminal 27 is transmitted to a so-called head end (not shown) of the cable or CATV system. The signal from the head end is transmitted through a CATV transmission line (not shown) to the receiving side.

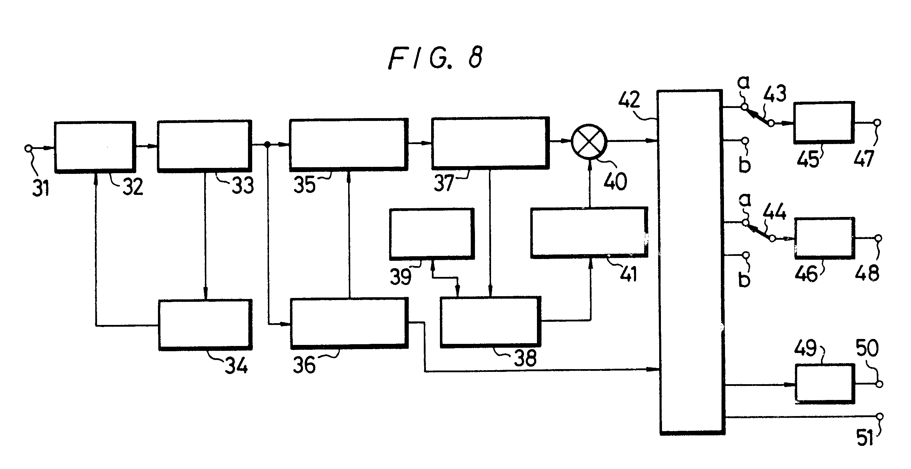

As shown on Fig. 8, the signal transmitted through the CATV transmission line is supplied through an input terminal 31 at the receiving side to a front end 32 in which it is amplified and then converted to an intermediate frequency signal of a predetermined frequency. This intermediate frequency signal is supplied to an AM detector, for example, a PLL (phase-locked loop) detector 33, which then demodulates a base band signal. Although the detector may be of the type of Am detector that is normally used in a standard television system, it is preferable to use the mentioned PLL detector 33 in order to avoid any waveform distortion.

A part of the output signal from PLL detector 33 is supplied to an AGC (automatic gain control) circuit 34 which applies an automatic gain control signal to front end 32.

The output from the PLL detector 33 is supplied to a data recovery circuit 35 in which, on the basis of a clock signal reproduced from the output of the PLL detector 33 by a clock recovery circuit 36, the level of the input signal to circuit 35 is discriminated by the center level of an eye pattern to thereby produce digital data. The data thus produced or recovered in circuit 35 is supplied to a succeeding sync/SB separator 37 in which the synchronizing signal and the service bits are separated from the data and supplied to a controller 38. The controller 38 which is desirably a microprocessor or microcomputer is adapted to carry out various control operations in synchronism with the synchronizing signal and the control data added to the service bit is stored through the controller 38 in a memory 39.

The data output from the sync/SB separator 37 is supplied to one input terminal of a multiplier 40 and multiplied in the latter by an M-sequence code signal supplied to the other input terminal of multiplier 40 from an M-sequence code oscillator 41 which may be similar to M-sequence code oscillator 14 of Fig. 7B. By reason of the foregoing, the data is descrambled and delivered from multiplier 40. In M-sequence code oscillator 41, by changing the initial value of the M-sequence code under the control of controller 38, such initial value is set in frame-synchronism with the transmitter side.

The data from multiplier 40 is supplied to a de-multiplexer 42 in which it is subjected to signal processing, such as, rearrangement of data (bit-deinterleaving), error correction and so on. The digital signals from de-multiplexer 42 are supplied through switches 43 and 44 to digital-to-analog (D/A) converters 45 and 46, respectively, in which they are converted from digital-to-analog signals and then delivered to output terminals 47 and 48, respectively. When switch 43 is changed-over from its fixed contact a to its fixed contact b, a signal corresponding to data from input terminal 1 (Fig. 7A) at the transmitting side is replaced by, or changed-over with a signal corresponding to data from input terminal 2 (Fig. 7A) in response to an address signal from de-multiplexer 42 in a time-division manner. When switch 44 is changed-over from its fixed contact a to its fixed contact b, the signal corresponding to the data from input terminal 3 (Fig. 7A) and the signal corresponding to the data from input terminal 4 (Fig. 7A) are selectively changed over by the address signal from de-multiplexer 42 in a time-division manner.

On the other hand, if a facsimile signal is obtained from de-multiplexer 42, such facsimile signal is delivered through a facsimile interface circuit 49 to an output terminal 50. Similarly, digital data, such as game software and so on, is directly delivered from de-multiplexer 42 to an output terminal 51.

In the system according to this invention as set forth above, since the digital data to be transmitted is bit-interleaved and multiplied with the M-sequence code signal to thereby be scrambled, and the initial value of the M-sequence code signal is changed constantly from time to time, the digital signal transmitting system is simple in circuit arrangement and descrambling is possible only when the receiving side is synchronized with the transmitting side so that digital signal transmission of very high security becomes possible.

Further, since the content of the service bit format is changed at every frame cycle, the scrambling can be effected at high speed. Furthermore, since the descramble key data (scramble key format) is serially transmitted by utilizing the service bit, such data can be descrambled with ease and at high speed in the receiving side.

In addition, since the scramble key data is always transmitted with a cycle shorter than that of the individual data, such as unique service format and so on, the changed scramble key data can be reset immediately.

## Claims

1.  A digital signal transmitting system arranged to transmit frames composed of words, each word being composed of at least synchronizing signals, service bit signals and information signals together with error check codes, said system comprising:
    - means (6) for providing said synchronizing signals;
    - means (12) for providing information signals together with said error check codes;
    - means (17a, 17b, 17c, 18, 19) for providing said service bit signals, whereby the service bit signals of the words within a frame have a predetermined format and indicate control data;
    - and adding means (15) for providing words and frames to be transmitted by adding said synchronizing signals, service bit signals and information signals together with error check codes;

**characterized in that**

- each of said means for providing said service bit signals (17a, 17b, 17c, 18, 19) is adapted to provide the service bit signals in one of a plurality of predetermined formats, each having a header part, whereby the different formats from the different means have different contents of the respective header part to indicate different control data;
- and control means (16) is provided for selecting for each frame one of said service bit formats.

2. A digital signal receiving system arranged to receive frames composed of words, each word being composed of frame synchronizing signals, service bit signals and information signals together with error check codes, said system comprising:
- means (37) for separating said service bit signals from said other signals;
- means (39) for storing the control data transmitted by said service bit signals;
- and means (38) for checking a header part of the service bit signals in each frame to detect the format of the received service bit signals to be able to recognize the control data transmitted by said service bit signals.

3. A system according to one of the claims 1 or 2, **characterized in that** one of said service bit formats is a unique service bit format indicating a terminal number, a group number, and/or a tier level.

4. A system according to claim 3, **characterized in that** said unique service bit format and another format are transmitted alternatingly in succeeding frames.

5. A system according to claim 4, **characterized in that** said other format is a scrambled key format.

**Revendications**

1. Système émetteur de signaux numériques agencé pour émettre des blocs constitués de mots, chaque mot étant constitué au moins de signaux de synchronisation, de signaux de bits de service et de signaux d'information ainsi que de codes de contrôle d'erreurs, ledit système comprenant:

un moyen (6) pour fournir lesdits signaux de synchronisation;

un moyen (12) pour fournir des signaux d'information ainsi que lesdits codes de contrôle d'erreurs;

des moyens (17a,17b,17c,18,19) pour fournir lesdits signaux de bits de service, par lesquels les signaux de bits de service des mots dans un bloc ont un format prédéterminé et indiquent des données de commande; et

un moyen additionneur (15) pour fournir des mots et des blocs à émettre par addition desdits signaux de synchronisation, des signaux de bits de service et des signaux d'information ainsi que des codes de contrôle d'erreurs;

caractérisé en ce que

chacun desdits moyens pour fournir lesdits signaux de bits de service (17a,17b,17c,18,19) est agencé pour fournir les signaux de bits de service dans un d'une pluralité de formats prédéterminés, chacun comportant une partie entête, les différents formats provenant des différents moyens ayant ainsi différents contenus de la partie en-tête respective pour indiquer différentes données de commande; et

un moyen de commande (16) est fourni pour sélectionner pour chaque bloc un desdits formats de bits de service.

2. Système récepteur de signaux numériques agencé pour recevoir des blocs constitués de mots, chaque mot étant constitué de signaux de synchronisation de bloc, de signaux de bits de service et de signaux d'information ainsi que de codes de contrôle d'erreurs, ledit système comprenant:

un moyen (37) pour séparer lesdits signaux de bits de service desdits autres signaux;

un moyen (39) pour mémoriser les données de commande émises par lesdits signaux de bits de service; et

un moyen (38) pour contrôler une partie en-tête des signaux de bits de service dans chaque bloc afin de détecter le format des signaux de bits de service reçus pour pouvoir identifier les données de commande émises par lesdits signaux de bits de service.

3. Système selon l'une quelconque des revendications 1 et 2, caractérisé en ce qu'un desdits formats de bits de service est un format unique de bits de service indiquant un numéro de terminal un numéro de groupe et/ou un niveau d'étage.

4. Système selon la revendication 3, caractérisé en ce que ledit format unique de bits de service et un autre format sont émis alternativement dans des blocs successifs.

5. Système selon la revendication 4, caractérisé en ce que ledit autre format est un format de clé brouillée.

**Patentansprüche**

1. Übertragungssystem für digitale Signale, das aus Wörtern zusammengesetzte Rahmen überträgt, wobei jedes Wort zumindest aus Synchronisiersignalen, Servicebitsignalen und Informationssignalen zusammen mit Fehlerprüfkodes zusammengesetzt ist, mit folgenden Baugruppen:
   - einer Einrichtung (6), die die Synchronisiersignale bereitstellt;
   - einer Einrichtung (12), welche die Informationssignale zusammen mit den Fehlerprüfkodes liefert;
   - Einrichtungen (17a, 17b, 17c, 18, 19), welche die Servicebitsignale bereitstellen, wobei die Servicebitsignale der Wörter innerhalb eines Rahmens ein vorgegebenes Format aufweisen und Steuerdaten beinhalten; und
   - einer Addiereinrichtung (15), welche die Synchronisiersignale, Servicebitsignale und Informationssignale mit den Fehlerprüfkodes zu den Wörtern und Rahmen zusammenfaßt;
   **dadurch gekennzeichnet,** daß
   - jede der Einrichtungen zum Bereitstellen der Servicebitsignale letztere (17a, 17b, 17c, 18, 19) in einem von mehreren vorgegebenen Formaten liefert, von denen jedes einen Kopfteil aufweist, wobei die verschiedenen Formate von verschiedenen Einrichtungen verschiedene Inhalte der jeweiligen Kopfteile aufweisen, um unterschiedliche Steuerdaten anzuzeigen;
   - und eine Steuereinrichtung (16) vorhanden ist, welche für jeden Rahmen eines dieser Serviceformate auswählt.

2. Empfangssystem für digitale Signale, das aus Wörtern zusammengesetzte Rahmen empfängt, wobei jedes Wort aus Rahmensynchronisiersignalen, Servicebitsignalen und Informationssignalen zusammen mit Fehlerprüfkodes zusammengesetzt ist, mit folgenden Baugruppen:
   - einer Einrichtung (37) zum Trennen der Servicebitsignale von den anderen Signalen;

   - einer Einrichtung (39) zum Speichern der durch die Servicebitsignale übertragenen Steuerdaten; und mit
   - einer Einrichtung (38) zum Überprüfen eines Kopfteils der Servicebitsignale in jedem Rahmen, um das Format der empfangenen Servicebitsignale festzustellen und um die durch die Servicebitsignale übertragenen Steuerdaten erkennen zu können.

3. System nach einem der Ansprüche 1 oder 2, **dadurch gekennzeichnet,** daß eines der Servicebitformate ein spezielles Servicebitformat ist, das eine Terminalnummer, eine Gruppennummer und/oder eine Nutzerqualitätskennzeichnung anzeigt.

4. System nach Anspruch 3, **dadurch gekennzeichnet,** daß das spezielle Servicebitformat und ein anderes Format abwechselnd in aufeinanderfolgenden Rahmen übertragen werden.

5. System nach Anspruch 4, **dadurch gekennzeichnet,** daß das andere Format einer verschlüsselten Signalübertragungsart entspricht.

## FIG. 1A

1 Word (168 bit )

| Word Sync (8bit ) | SB (4bit ) | DATA (32×4 bit ) | ECC (7×4 bit ) |

## FIG. 1B

| SB₁ | SB₂ | SB₃ | SB₄ |

| Ch1 MSB | Ch2 MSB | Ch3 MSB | Ch4 MSB | Ch1 2SB | Ch2 2SB | - - - - - | Ch1 32SB | Ch2 32SB | Ch3 32SB | Ch4 32SB |

| Ch1 BCH0 | Ch2 BCH0 | Ch3 BCH0 | Ch4 BCH0 | - - - - | Ch3 BCH6 | Ch4 BCH6 |

## FIG. 2

1 Frame (256 Word)

| 8 bit | 4 bit | 32×4 bit | 28 bit | 8 bit | 4 bit | | 8 bit | 4 bit | 32×4 bit | 28 bit |
| Frame Sync | SB | DATA | ECC | Word Sync (1) | SB | | Word Sync(255) | SB | DATA | ECC |

SB₁ SB₂ SB₃ SB₄

FIG. 3A — Unique SB Format (USF) · 1 Frame (256 Word) — Header · Command · Terminal No. · Group No. · Tier Level · ECC

FIG. 3B — Group SB Format (GSF) — Header · Command · Space · Group No. · Space · ECC

FIG. 3C — Channel SB Format (CSF) — Header · Space · Channel No. · Tier Level · Space · ECC

FIG. 3D — All SB Format (ASF) — Header · Command · Space · ECC

FIG. 3E — Scramble Key Format (SKF) — Header · Command · Space · Scramble Key Code · Space · ECC

## FIG. 4

Command

Data  FAX  Announce  Emergeucy

## FIG. 5

| ←1 Frame→ | ←2 Frame→ | ←3 Frame→ | ←4 Frame→ |
|---|---|---|---|
| Odd | Even | Odd | Even |

ASF or GSF or CSF or SKF

USF

## FIG. 6A  FIG. 6B  FIG. 6C  FIG. 6D

| Terminal No. XXXX00 (SB1) | Terminal No. XXXX01 (SB2) | Terminal No. XXXX10 (SB3) | Terminal No. XXXX11 (SB4) |
|---|---|---|---|
| N-3-L · ECC | N-2-L · ECC | N-1-L · ECC | N-L · ECC |
| Tier Level | Tier Level | Tier Level | Tier Level |
| Group No. | Group No. | Group No. | Group No. |
| Terminal No. | Terminal No. | Terminal No. | Terminal No. |
| Command | Command | Command | Command |
| N-3 · Header | N-2 · Header | N-1 · Header | N · Header |

Unique SB Format

12

FIG. 7A

FIG. 7B

FIG. 8

EP 0 162 461 B1